# EUROPEAN PATENT SPECIFICATION

(11) **EP 3 530 638 B1**
(45) Date of publication and mention of the grant of the patent: **17.02.2021**
(21) Application number: 16919043.6
(22) Date of filing: 21.10.2016
(51) Int. Cl.: C05F 11/02, B02C 19/18, C07C 51/16, C07C 51/285

(54) **IMPROVED METHOD FOR EXTRACTING HUMIC SUBSTANCES FROM CARBON**
VERBESSERTES VERFAHREN ZUR EXTRAKTION VON HUMINSTOFFEN AUS KOHLENSTOFF
PROCÉDÉ AMÉLIORÉ D'EXTRACTION DE SUBSTANCES HUMIDES À PARTIR DE CARBONE

(43) Date of publication of application: 28.08.2019
(73) Proprietor: FERTINAGRO BIOTECH, S.L., 44195 Teruel (ES)
(72) Inventor: ATARES REAL, Sergio, 44195 Teruel (ES); MARTIN PEREZ, Julia Raquel, 44195 Teruel (ES); ROMERO LOPEZ, Joaquin, 44195 Teruel (ES); SALAET MADORRAN, Ignasi, 44195 Teruel (ES); FERRER GINES, María, 44195 Teruel (ES); NARANJO OLIVERO, Miguel Angel, 44195 Teruel (ES)
(74) Representative: González López-Menchero, Álvaro Luis
(86) International application number: PCT/ES2016/070745
(87) International publication number: WO 2018/073463

(56) References cited:
- WO-A1-2015/163785
- CN-A- 101 768 019
- RU-A- 2010 116 035
- US-A- 3 700 728
- US-A- 5 026 416
- MECOZZI M ET AL.: 'An ultrasound assisted extraction of the available humic substance from marine sediments' ULTRASONICS: SONOCHEMISTRY vol. 9, no. 1, 01 January 2002, ISSN 1350-4177 pages 11 - 18, XP004319694
- MOREDA-PINEIRO A ET AL.: 'New trends involving the use of ultrasound energy for the extraction of humic substances from marine sediments' ANALYTICA CHIMICA ACTA vol. 524, no. 1-2, 25 October 2004, AMSTERDAM, NL, ISSN 0003-2670 pages 97 - 107, XP004582501
- CHEMAT F ET AL.: 'Sono-oxidation treatment of humic substances in drinking water' ULTRASONICS: SONOCHEMISTRY vol. 8, no. 3, 01 July 2001, ISSN 1350-4177 pages 247 - 250, XP004245614

## Description

The present invention relates to an improved method for extracting humic substances from coal.

More specifically, the invention provides an improved method for the extraction by oxidation of humic substances from coal, the method including a step of milling by means of sonication before the step of oxidising, the step of oxidising being carried out in the presence of an oxidising agent under irradiation with ultraviolet light.

Different processes for transforming coal in organic soil amendments are well-known, particularly processes for obtaining humic substances from coal in general and from lignite in particular.

In this regard, humic substances are characterised by their aromatic chains, such as polyphenols and polyquinones, which are very complex structures; these groups are formed by decomposition, synthesis and polymerisation. Humic substances do not have clearly defined physical and/or chemical properties, they are amorphous, dark in colour and have very high molecular weights, ranging from hundreds to thousands. Based on their resistance to degradation and their solubility in acids and bases, humic substances are classified into three chemical groups: (a) fulvic acid, having the lowest molecular weight and the lightest colour, soluble in bases and acids; (b) humic acid, having intermediate colour and molecular weight, soluble in bases and insoluble in acids; and (c) humin, the constituent having the highest molecular weight, the darkest colour, insoluble in bases and acids. Normally, like in the present description, fulvic acids and humic acids are generically referred to as "humic extracts".

Today there are a number of methodologies for transforming coal into humic extracts, and they are based on chemical oxidations, using different chemical reagents (see, for example, "Hydrogen peroxide oxidation of humic acids and lignite", Leoš̌̌ Doskocil et al., Fuel 134 (2014) 406-413; "Humic acids from lignite. Analytical characteristics and thermal degradation", Francisco Martin, Fuel, Vol. 54, October 1975), and oxidations in oxygen-deficient atmospheres in furnaces.

Thus, in reference to chemical oxidation, for example, document KR20150105509 describes a method of producing humic and fulvic acids from lignite using oxidation with nitric acid Further methods for obtaining humic acids from coal not according to the current invention are discussed in patent document US5026416 A.

Likewise, document CN103897735 describes a method for improving the yield of the oxidation-reduction of lignite wax with sodium bichromate and sulphuric acid.

Thus, the oxidation of coal has been researched using a wide range of oxidising agents such as nitric acid, potassium permanganate, potassium dichromate, hydrogen peroxide, performic acid and hypochlorites, studying in each case the influence of the operating parameters such as the reaction temperature, treatment time and concentration of the reagent used, and even the variation in pressure when the processes have been performed at pressures other than atmospheric pressure.

However, these known processes of chemical oxidation with different oxidising agents such as nitric acid, hydrogen peroxide, potassium permanganate, etc., or heat oxidation, introducing the coal in a dryer and performing partial oxidation in an oxygen-deficient atmosphere, have a high cost which often exceeds the final price of the product itself that is obtained.

Accordingly, an object of the present invention is to provide an improved method for obtaining humic acids from coal via chemical oxidation, using an oxidising agent, where the method includes a step of milling by means of sonication before the step of oxidising, the step of oxidising being carried out under irradiation with ultraviolet light with a hydrogen peroxide oxidising agent.

Although it is common to perform a prior treatment step of milling the coal in processes of chemical oxidation of coal to obtain humic substances, as indicated, for example, in the document "Hydrogen peroxide oxidation of humic acids and lignite" (as above), where the coal is subjected to prior milling to achieve a particle size less than 2 mm, given that the coal oxidation reaction with an oxidising agent is favoured by increasing the contact between the surface of the ground coal particles and said oxidising agent, the present invention has the advantage that it allows reducing the particle size in the step of milling by means of sonication, destroying large sized particles to achieve a larger proportion of smaller sized particles, in a range of 10 -100 microns.

Likewise, when the process of milling by means of sonication is carried out in wet conditions, the coal particles are furthermore subjected to cavitation phenomena, where millions of microscopic bubbles experiencing rapid expansion and collapse processes are generated and transmit their energy to the coal material, making said material more porous.

Thus, this step of milling by means of sonication therefore allows obtaining a coal particle size suitable for maximising the surface contact with the oxidising agent and at the same time with the interior of the particles due to the formation of pores by cavitation, enhancing coal oxidation and, with it, the extraction of humic acids from the coal microparticles.

On the other hand, the use of hydrogen peroxide as an oxidising agent is well-known and widely used in the treatment of organic matter contaminants, for example in the increase of the biodegradability of an effluent, for waste water treatment or for removing specific organic compounds ("Procesos de oxidación radicalaria y soluciones avanzadas para el tratamiento de efluentes industriales" ["Radical oxidation processes and advanced solutions for the treatment of industrial effluents"], 1130-9881, in Retema (Technical Journal of Environment), 2010, 23(140): 28-35).

Thus, radical oxidation by hydrogen peroxide is based on the maximum production of a very strong oxidising radical, such as the hydroxyl radical, with a high oxidation potential.

Thus, the application of a step of oxidising with hydrogen peroxide under irradiation with ultraviolet light according to the invention allows increasing the production of hydroxyl radicals, and therefore, the yield of the sonicated coal particle oxidation reaction, which leads to a higher yield of obtained humic acids after the chemical oxidation of coal in these conditions.

Therefore, the joint action of the step of milling by means of sonication and the step of oxidation with hydrogen peroxide under ultraviolet irradiation allows achieving a yield of 95% conversion of coal into humic acids, compared to a yield of 75% reached by conventional processes of oxidation with hydrogen peroxide.

The present invention provides an improved method for obtaining humic acids from coal via chemical oxidation using hydrogen peroxide as an oxidising agent, where the method includes a step of milling the coal by means of sonication to obtain coal particles with a particle size in the range of 10 - 100 microns, preferably 10-50 microns, and in particular, 10-30 microns, before the step of oxidising *per se,* and where this step of oxidising with hydrogen peroxide is carried out under irradiation with ultraviolet light, preferably in a wavelength range of 80 to 350 nm, in particular with a wavelength of 200 nm.

In one embodiment of the invention, irradiation of the sonicated coal particles with the specified particle size during oxidation with hydrogen peroxide is carried out in a reactor with different ultraviolet (UV) irradiation lamps of different wavelengths within the range of 80 to 350 nm. This "sequential" oxidation as regards irradiation wavelengths allows generating hydroxyl radicals in a gradual manner and oxidising the sonicated coal particles in a selective manner.

In another embodiment of the invention, irradiation of the sonicated coal particles with the specified particle size during oxidation with hydrogen peroxide is carried out in a reactor with lamps emitting UV radiation in a range of 200 nm, the maximum formation of hydroxyl radicals taking place at this wavelength.

In yet another embodiment of the invention, the process of milling by means of sonication is carried out in a range of frequencies of at least 10 kHz, from 1,000 to 2,500 W, obtaining coal particles with a size in the range of 10 - 100 microns, preferably 10-50 microns, particularly 10 to 30 microns.

In another embodiment of the invention, the step of milling by means of sonication is carried out in wet conditions, preferably by mixing the coal material with water in a ratio by weight between 20 and 50% (g of water per 100 g of coal).

In another embodiment of the invention, the hydrogen peroxide:coal ratio in the step of oxidising is 1-1.5:1, using hydrogen peroxide at a concentration of at least 30% by weight.

The invention is described below based on illustrative, non-limiting examples thereof.

### Example 1

Carbon extracted from a mining basin in Teruel (chiefly coals classified as lignite or sub-bituminous coal, suitable for oxidation for the purpose of producing humic acids and obtaining liquid fuels) was mixed with water to form a coal in water suspension at a ratio of between 20 and 50 grams of water per 100 grams of coal. This mixture was subjected to a process of milling by means of sonication in a sonicator at a working frequency of 10 - 20 kHz at 2,500 W. A porous coal material with a mean particle size of 22 microns was obtained.

Next, the sonicated coal mixture was subjected to a step of oxidising with 30% hydrogen peroxide, with the peroxide:coal ratio being 1-1.5:1, under irradiation with ultraviolet light (200 nm) for a period of 4 to 6 hours.

For the purpose of comparison, using the same extracted coal, a conventional milling process (mean particle size of about 2 mm) and oxidation with hydrogen peroxide (in the same ratio as before) was carried out, and the oxidation reaction was maintained for 4-6 hours.

In both cases, assays were performed without prior sonication.

The results of the assays are shown in the following tables, where HE represents the humic extract expressed as a percentage:

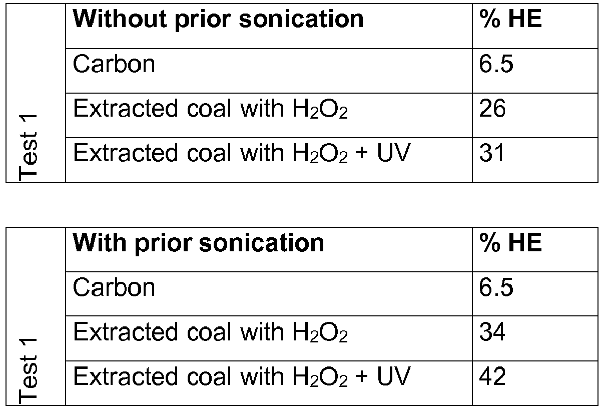

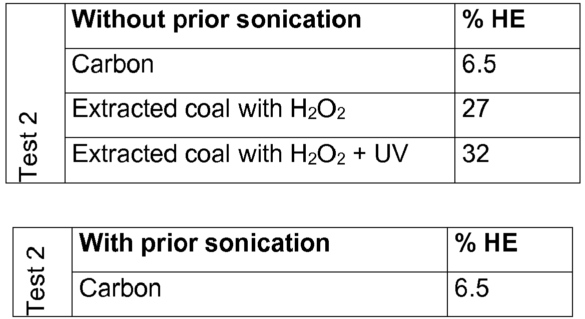

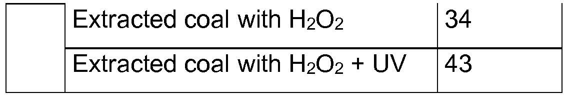

As can be observed in the results, the highest humic extract percentages correspond to the process that includes milling by means of sonication and oxidation under ultraviolet irradiation.

### Example 2:

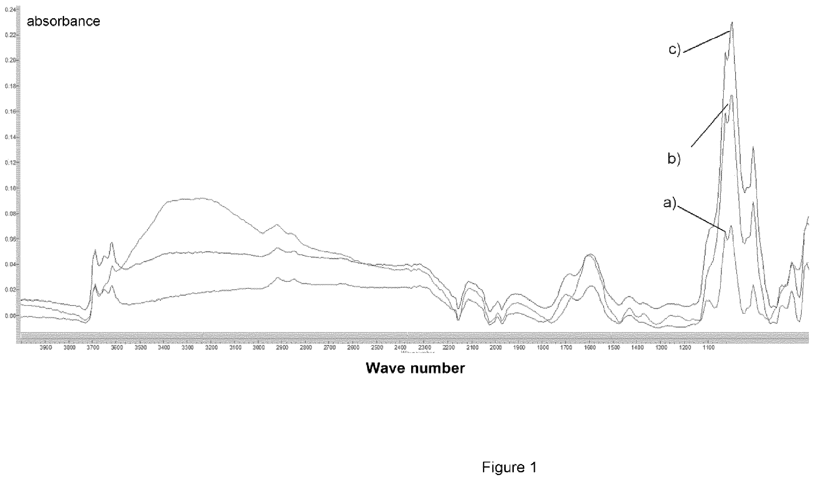

The corresponding spectroscopy assays were performed. The assay conditions for obtaining the material in this case were similar to the preceding assay, with the difference being the assay time, which was 8 hours. Once the extracted product was obtained, it was dried for subsequent FTIR analysis. To obtain the spectrum, Agilent Cary 830 equipment was used to titrate the previously obtained samples for the presence of humic components (see Figure 1), corresponding essentially to the 1,700 nm band, with this wavelength indicating the transformation of the organic matter into functional groups, such as C=O and COOH bonds, where it can be seen that, for the coal spectrum, this peak does not exist, and for the assay performed with hydrogen peroxide under irradiation with UV light, this is the peak that increases the most.

The tables corresponding to the peaks obtained in the following three cases are shown below: a) coal treated by means of the conventional process of oxidation with hydrogen peroxide (line 1 in Figure 1); b) coal treated by means of milling with sonication and subsequent oxidation with hydrogen peroxide (line 2 in Figure 1); and c) coal treated by means of milling with sonication and subsequent oxidation with hydrogen peroxide under UV irradiation (line 3 in Figure 1):

| Peaks a) | Centre | Area | Height | Left edge | Right edge |
|---|---|---|---|---|---|
| Peak 1 | 744.209 | 0.276 | 0.010 | 790.196 | 730.558 |
| Peak 2 | 910.173 | 0.693 | 0.024 | 953.918 | 843.796 |
| Peak 3 | 1004.585 | 3.961 | 0.068 | 1065.939 | 955.817 |
| Peak 4 | 1099.463 | 0.358 | 0.011 | 1132.392 | 1084.655 |
| Peak 5 | 1257.734 | 0.416 | 0.006 | 1308.967 | 1191.250 |
| Peak 6 | 1373.829 | 0.102 | 0.004 | 1386.570 | 1349.296 |
| Peak 7 | 1434.691 | 0.358 | 0.009 | 1470.353 | 1400.102 |
| Peak 8 | 1603.862 | 6.619 | 0.053 | 1743.759 | 1477.947 |
| Peak 9 | 1921.561 | 1.857 | 0.014 | 1975.395 | 1760.847 |
| Peak 10 | 1990.827 | 0.115 | 0.007 | 2012.762 | 1986.671 |
| Peak 11 | 2109.970 | 2.196 | 0.026 | 2153.869 | 2036.152 |
| Peak 12 | 2341.070 | 0.558 | 0.004 | 2344.495 | 2243.857 |
| Peak 13 | 2920.587 | 0.900 | 0.010 | 2952.052 | 2767.135 |
| Peak 14 | 3240.138 | 1.040 | 0.002 | 3451.515 | 3291.239 |
| Peak 15 | 3294.138 | 1.040 | 0.002 | 3451.515 | 3291.239 |
| Peak 16 | 3615.879 | 0.191 | 0.009 | 3672.795 | 3596.881 |
| Peak 17 | 3689.838 | 0.329 | 0.016 | 3712.666 | 3671.428 |
| | | | | | |

| Peaks b) | Centre | Area | Height | Left edge | Right edge |
|---|---|---|---|---|---|
| Peak 1 | 686.207 | 1.300 | 0.0035 | 710.890 | 650.133 |
| Peak 2 | 747.552 | 1.145 | 0.025 | 950.121 | 855.188 |
| Peak 3 | 910.526 | 1.843 | 0.056 | 950.121 | 855.188 |
| Peak 4 | 1002.598 | 11.033 | 0.137 | 1128.594 | 948.222 |
| Peak 5 | 1272.467 | 0.035 | 0.001 | 1289.659 | 1248.658 |
| Peak 6 | 1433.526 | 0.528 | 0.008 | 1476.049 | 1333.649 |
| Peak 7 | 1593.529 | 1.288 | 0.017 | 1646.928 | 1514.022 |
| Peak 8 | 1700.706 | 0.547 | 0.010 | 1755.151 | 1673.575 |
| Peak 9 | 1909.963 | 0.839 | 0.008 | 1973.497 | 1804.516 |
| Peak 10 | 1993.400 | 0.124 | 0.006 | 2021.309 | 1975.369 |
| Peak 11 | 2114.492 | 1.486 | 0.018 | 2154.929 | 2028.789 |
| Peak 12 | 2320.130 | 1.187 | 0.007 | 2340.768 | 2164.070 |
| Peak 13 | 2653.174 | 0.047 | 0.001 | 2657.592 | 2605.409 |
| Peak 14 | 2918.100 | 0.170 | 0.005 | 2966.616 | 2892.414 |
| Peak 15 | 3041.008 | 0.203 | 0.001 | 3291.239 | 3019.144 |
| Peak 16 | 3618.357 | 0.325 | 0.011 | 3666.786 | 3571.724 |
| Peak 17 | 3689.119 | 0.313 | 0.016 | 3704.974 | 3675.155 |
| | | | | | |

| Peaks c) | Centre | Area | Height | Left edge | Right edge |
|---|---|---|---|---|---|
| Peak 1 | 682.099 | 1.126 | 0.032 | 716.586 | 659.739 |
| Peak 2 | 746.539 | 1.427 | 0.031 | 813.417 | 718.484 |
| Peak 3 | 910.484 | 2.133 | 0.066 | 946.323 | 862.782 |
| Peak 4 | 1001.589 | 12.649 | 0.160 | 1132.392 | 948.222 |
| Peak 5 | 1266.158 | 0.206 | 0.003 | 1326.055 | 1195.047 |
| Peak 6 | 1436.189 | 0.520 | 0.007 | 1476.049 | 1327.953 |
| Peak 7 | 1696.000 | 1.103 | 0.041 | 1772.239 | 1477.947 |
| Peak 8 | 1914.058 | 1.288 | 0.012 | 1967.801 | 1791.226 |
| Peak 9 | 2114.042 | 1.852 | 0.022 | 2151.970 | 2030.456 |
| Peak 10 | 2340.626 | 1.295 | 0.004 | 2344.495 | 2155.768 |
| Peak 11 | 2918.436 | 0.564 | 0.007 | 2983.582 | 2818.399 |
| Peak 12 | 3345.127 | 0.255 | 0.002 | 3490.523 | 3339.695 |
| Peak 13 | 3618.944 | 0.685 | 0.021 | 3663.301 | 3556.976 |
| Peak 14 | 3689.752 | 0.566 | 0.027 | 3714.565 | 3675.155 |

Thus, another characteristic peak of humic acids is the one appearing at a wavelength of 1,000 nm, showing the C-O bond content of polysaccharides (for example in "Humus Chemistry. Genesis, Composition, Reactions", Second Edition. F.J. Stevenson, Ed. John Wiley & Sons, Inc. ISBN: 0-471-59474-1, information relative to each peak is described); there is an area of 3.96 for the coal treated by means of the conventional process of oxidation with hydrogen peroxide, of 11.03 for the coal treated by means of milling with sonication and subsequent oxidation with hydrogen peroxide, and of 12.65 for the process including the steps of milling with sonication and subsequent oxidation with hydrogen peroxide under UV irradiation, which involves an increase in the oxidation yield of between 15% and 20%.

## Claims

1. An improved method for obtaining humic acids from coal via chemical oxidation, the method including a prior step of milling the coal and a step of oxidising the same with hydrogen peroxide, **characterised in that** the step of milling is carried out by means of sonication at a frequency of at least 10 kHz to obtain a coal particle size between 10 and 100 microns, and **in that** the step of oxidising with hydrogen peroxide is performed under irradiation with ultraviolet light in a wavelength range of 80 to 350 nm.

2. The method according to claim 1, **characterised in that** the step of milling by means of sonication is performed in wet conditions by mixing the coal with water in a ratio between 20 and 50 g of water per 100 g of coal.

3. The method according to the preceding claims, **characterised in that** the step of oxidising with hydrogen peroxide is performed under irradiation with ultraviolet light at a wavelength of 200 nm.

4. The method according to the preceding claims, **characterised in that** in the step of oxidising, hydrogen peroxide at a concentration of at least 30% is used.

5. The method according to the preceding claims, **characterised in that** in the step of oxidising, the hydrogen peroxide: coal ratio is 1-1.5:1.

## Patentansprüche

1. Verbessertes Verfahren zum Erhalten von Huminsäuren aus Kohle über chemische Oxidation, wobei das Verfahren einen vorherigen Schritt des Mahlens der Kohle und einen Schritt des Oxidierens davon mit Wasserstoffperoxid einschließt, **dadurch gekennzeichnet, dass** der Schritt des Mahlens mittels Beschallung bei einer Frequenz von mindestens 10 kHz zum Erhalten einer Kohlenteilchengröße zwischen 10 und 100 Mikrometern ausgeführt wird, und dadurch, dass der Schritt des Oxidierens mit Wasserstoffperoxid unter Bestrahlung mit Ultaviolettlicht in einem Wellenlängenbereich von 80 bis 350 nm durchgeführt wird.

2. Verfahren nach Anspruch 1, **dadurch gekennzeichnet, dass** der Schritt des Mahlens mittels Beschallung in nassen Bedingungen durch Mischen der Kohle mit Wasser in einem Verhältnis zwischen 20 und 50 g Wasser pro 100 g Kohle durchgeführt wird.

3. Verfahren nach einem der vorstehenden Ansprüche, **dadurch gekennzeichnet, dass** der Schritt des Oxidierens mit Wasserstoffperoxid unter Bestrahlung mit Ultraviolettlicht bei einer Wellenlänge von 200 nm durchgeführt wird.

4. Verfahren nach einem der vorstehenden Ansprüche, **dadurch gekennzeichnet, dass** in dem Schritt des Oxidierens Wasserstoffperoxid in einer Konzentration von mindestens 30% verwendet wird.

5. Verfahren nach einem der vorstehenden Ansprüche, **dadurch gekennzeichnet, dass** in dem Schritt des Oxidierens das Wasserstoffperoxid: Kohlenverhältnis 1-1,5:1 beträgt.

## Revendications

1. Procédé amélioré pour l'obtention d'acides humiques à partir du charbon par oxydation chimique, le procédé comportant une étape préalable de broyage du charbon et une étape d'oxydation de celui-ci avec du peroxyde d'hydrogène, **caractérisé en ce que** l'étape de broyage est réalisée par sonication à une fréquence d'au moins 10 kHz pour obtenir une granulométrie de charbon entre 10 et 100 microns, et **en ce que** l'étape d'oxydation au peroxyde d'hydrogène est effectuée sous irradiation avec une lumière ultraviolette dans une plage de longueurs d'onde de 80 à 350 nm.

2. Procédé selon la revendication 1, **caractérisé en ce que** l'étape de broyage par sonication est effectuée dans des conditions humides en mélangeant le charbon avec de l'eau dans un rapport entre 20 et 50 g d'eau pour 100 g de charbon.

3. Procédé selon les revendications précédentes, **caractérisé en ce que** l'étape d'oxydation avec du peroxyde d'hydrogène est effectuée sous irradiation avec une lumière ultraviolette à une longueur d'onde de 200 nm.

4. Procédé selon les revendications précédentes, **caractérisé en ce que** dans l'étape d'oxydation, du peroxyde d'hydrogène est utilisé à une concentration d'au moins 30 %.

5. Procédé selon les revendications précédentes, **caractérisé en ce que** dans l'étape d'oxydation, le rapport peroxyde d'hydrogène:charbon est de 1-1,5:1.
